(19) Europäisches Patentamt
European Patent Office
Office européen des brevets

(11) Veröffentlichungsnummer: **0 047 357**
**B1**

(12) # EUROPÄISCHE PATENTSCHRIFT

(45) Veröffentlichungstag der Patentschrift: **25.05.83**

(51) Int. Cl.³: **C 01 B 5/02**

(21) Anmeldenummer: **81103969.2**

(22) Anmeldetag: **23.05.81**

(54) **Verfahren zur Herstellung von mit Deuterium angereichertem Wasser bei der Gewinnung von Wasserstoff.**

(30) Priorität: **01.09.80 CH 6570/80**

(43) Veröffentlichungstag der Anmeldung: **17.03.82 Patentblatt 82/11**

(45) Bekanntmachung des Hinweises auf die Patenterteilung: **25.05.83 Patentblatt 83/21**

(84) Benannte Vertragsstaaten: **AT DE FR GB IT**

(56) Entgegenhaltungen:
**CH-A-574 368**
**CH-A-616 602**
**DE-B-2 013 721**
**GB-A-867 736**

(73) Patentinhaber: **GEBRÜDER SULZER AKTIENGESELLSCHAFT, Zürcherstrasse 9, CH-8401 Winterthur (CH)**

(72) Erfinder: **Mandrin, Charles, Dr., Im Laubegg 7, CH-8406 Winterthur (CH)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

**EP 0 047 357 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von mit Deuterium angereichertem Wasser bei der Gewinnung von Wasserstoff

Die Erfindung betrifft ein Verfahren zur Herstellung von mit Deuterium angereichertem Wasser bei der Gewinnung von Wasserstoff, gemäß Oberbegriff von Anspruch 1.

Ein derartiges Verfahren ist beispielsweise aus der CH-A-616 602 bekannt. Hierbei geht man davon aus, daß bei Verfahren zur Gewinnung von Wasserstoff, welcher beispielsweise zur Erzeugung von Ammoniak oder Methanol benötigt wird, erhebliche Durchsatzmengen von Wasserstoff, Wasser und Wasser-Dampf vorhanden sind, und es daher möglich ist, als Nebenprodukt mit Deuterium angereichertes Wasser zu gewinnen, welches als Ausgangsprodukt für eine Anlage zur Gewinnung von schwerem Wasser üblicher Bauart verwendet wird.

Bekanntlich ist eine solche Anlage in bezug auf Energie- und apparativen Aufwand umso wirtschaftlicher, je höher die Deuteriumkonzentration des Ausgangsproduktes ist.

Es ist weiterhin bekannt, daß bei den bekannten katalytischen und/oder thermischen Verfahren zur Gewinnung von Wasserstoff eine Deuteriumanreicherung des Wasserdampfes auf Kosten einer Deuteriumverarmung des Wasserstoffes erfolgt.

In der CH-A-574 368 ist beispielsweise im einzelnen eine derartige, in der Praxis übliche Wasserstoff-Gewinnungsanlage beschrieben und dargestellt.

Bei dem bekannten Prozeß soll das die Gewinnungsanlage verlassende Gemisch in die gasförmigen und flüssige Komponenten getrennt werden, das dabei gewonnene Kondensat isoliert und im Kondensat enthaltenes Deuterium in die Beschickung der Gewinnungsanlage zurückgeführt werden, wobei im Kondensat enthaltenes Deuterium durch Isotopenaustausch im Gegenstrom auf einen Teilstrom des Frischwasserdampfes übertragen und mit diesem in die Beschickung der Gewinnungsanlage zurückgeführt wird.

Hierbei soll erreicht werden, daß der in einer thermischen und katalytischen Anlage gewonnene Wasserstoff die Anlage mit natürlicher Deuterium-Konzentration verläßt. Aus dem in Ausführungsbeispiel aus der Anlage herausgeführten Synthesegas soll dann in an sich bekannter Weise Deuterium zum Zwecke einer Gewinnung von schwerem Wasser extrahiert werden, bevor das Synthesegas in einer Syntheseanlage zu Ammoniak aufgearbeitet wird.

Wenn man die bekannte Anlage so modifizieren würde, daß man anstelle der Deuterium-Extraktion aus dem Synthesegas, das die Wasserstoff-Gewinnungsanlage verlassende, auskondensierte Abwasser als Ausgangsprodukt für eine Schwerwasser-Gewinnungsanlage verwenden würde, so wäre zwar die Deuterium-Konzentration höher als die natürliche Deuterium-Konzentration des Wasserstoffes, jedoch nicht höher als ca. 200 ppm$\left(\frac{D}{D+H}\right)$.

Bei dem anderen eingangs erwähnten, aus der CH-A-616 602 bekannten Prozeß, ist es zwar möglich, ein an Deuterium etwas höher angereichertes Ausgangsprodukt für die Schwerwasser-Gewinnungsanlage zu erzeugen, im Ausführungsbeispiel 333 ppm $\left(\frac{D}{D+H}\right)$. Dieses Ziel kann aber nur dadurch erreicht werden, daß der in die Wasserstoff-Gewinnungsanlage eingespeiste Wasserdampf über die natürliche Deuteriumkonzentration dadurch angereichert wird, daß er mit einem mit Deuterium angereicherten Wasserstrom in Isotopenaustausch gebracht wird, wobei sich dieser Wasserstrom aus einem ersten Teilstrom von aus einem dem Wasserstoff-Erzeuger nachgeschalteten Kondensator entnommenen Wasserstrom und aus einem aus einer zusätzlichen Wasserquelle stammenden, während des Verfahrens mit Deuterium angereicherten, zweiten Teilstrom zusammengesetzt, dessen Deuteriumkonzentration zwischen der natürlichen Deuteriumkonzentration und derjenigen des ersten Teilstroms liegt, daß das aus Wasserstoff, Wasserdampf und Restkomponenten bestehende Gasgemisch aus dem Kondensator in mindestens eine Austauschstufe eingeleitet wird, in welcher in einer Trennstufe unter Anwesenheit eines Katalysators durch Isotopenaustausch zwischen dem Wasserstoff und dem Wasserdampf des Gemisches sich der Wasserdampf mit Deuterium anreichert, daß das in einer Austauschkolonne das aus der zusätzlichen Wasserquelle entnommene Wasser in Kontakt mit dem Gemisch gebracht wird, wobei sich das Wasser durch Isotopenaustausch mit dem Wasserdampf mit Deuterium anreichert, und daß der Gemischstrom, der nach Kondensieren des in ihm verbliebenen Wasserdampfes im wesentlichen aus Wasserstoff besteht, aus der Anlage abgezogen und das mit Deuterium angereicherte Wasser dem dem Wasserstofferzeuger nachgeschalteten Kondensator entnommen wird.

Eine derartige Anlage benötigt demnach eine zusätzliche Synthesegas-Wasseraustauschanlage zur Erreichung der gewünschten Deuteriumanreicherung des Ausgangsproduktes für die Schwerwasser-gewinnungsanlage.

Gegenüber den bekannten Prozessen hat es sich die Erfindung zur Aufgabe gemacht, eine Deuteriumanreicherung der auskondensierten Abwasserkomponente, die als Ausgangsprodukt für eine Anlage zur Gewinnung von schwerem Wasser dient, auf wirtschaftlichere Weise zu ermöglichen. Und zwar soll dieses Ziel erreicht werden, ohne daß beispielsweise bei einer bereits bestehenden

Anlage zur Gewinnung von Wasserstoff kostspielige Apparate erforderlich sind, die unter Umständen noch mit einem erheblichen energetischen Aufwand belastet sind.

Diese Aufgabe wird erfindungsgemäß mit den Merkmalen von Anspruch 1 gelöst.

In den Ansprüchen 2 und 4 sind zwei vorteilhafte Ausführungsformen für die Durchführung des erfindungsgemäßen Verfahrens nach Anspruch 1 angegeben.

In den zugehörigen Anlagen sind lediglich zusätzliche Speicherbehälter erforderlich.

Bei der Erfindung macht man es sich zunutze, daß die bekannten katalytischen und/oder thermischen Anlagen zur Gewinnung von Wasserstoff aus Gründen der chemischen Gleichgewichtsbedingungen bei den stattfindenden Reaktionen eine Zuführung von Wasser bzw. Wasserdampf im Überschuß erfordern. Das Verhältnis der im Überschuß zugeführten Wassermenge zu der Menge des die Anlage verlassenden Abwassers richtet sich nach der Art des bei der Wasserstoffgewinnung erfolgenden Prozesses und ist insbesondere von der Art des zurückgeführten Brennstoffes abhängig.

Der Erfindung liegt die Erkenntnis zugrunde, daß aufgrund der zeitlich hintereinander ablaufenden Betriebsperioden, während welcher außer der ersten Betriebsperiode immer das angereicherte Abwasser der vorangehenden Betriebsperiode als Speisewasser für die Anlage zur Gewinnung von Wasserstoff verwendet wird, eine nahezu beliebig hohe Aufkonzentrierung des Abwassers an Deuterium erreicht werden kann, die an späterer Stelle noch im einzelnen erläutert wird.

Am Ende der letzten Betriebsperiode steht für eine Anlage zur Gewinnung von schwerem Wasser als Ausgangsprodukt eine relativ kleine, jedoch sehr stark an Deuterium angereicherte Wassermenge zur Verfügung.

Die Menge des Ausgangsproduktes sowie ihre Deuteriumkonzentration richtet sich hierbei nach den Durchsätzen, der Anzahl der Betriebsperioden und Länge der gesamten Betriebszeit, wobei die erste Betriebsperiode maßgebend für die Zeitdauer der darauf folgenden, zeitlich gestaffelten Betriebsperioden ist.

Es sei jedoch darauf hingewiesen, daß die Durchsätze aller an der Wasserstoffgewinnung beteiligten Komponenten während den Betriebsperioden jeweils gleich groß sind, und nur die Betriebsperioden bis zum Ende der Betriebszeit immer kürzer werden.

Die der Erfindung zugrundeliegende Aufgabe kann in einer Anlage gelöst werden, welche lediglich zusätzlich einen bzw. mehrere Speicherbehälter und Fördermittel, wie Pumpen, erfordert.

Durch eine vorteilhafte Weiterbildung der Erfindung kann außerdem ein kontinuierlicher Betrieb einer Anlage zur Gewinnung von schwerem Wasser ermöglicht werden, auch wenn aus betrieblichen Gründen, z. B. durch Stromausfall, die Anlage zur Gewinnung von Wasserstoff während der Betriebszeit kurzzeitig ausfällt.

Diese besteht in einer Ausführungsform des Verfahrens gemäß den Merkmalen des Anspruchs 2 darin, daß das am Ende der letzten Betriebsperiode auskondensierte Abwasser vor seiner Einleitung in die Anlage zur Gewinnung von schwerem Wasser während einer vorgegebenen Zeit gespeichert wird.

Bei einer Ausführungsform des Verfahrens gemäß den Merkmalen des Anspruchs 4 wird der zweite Behälter entsprechend groß dimensioniert und vor der Inbetriebnahme der Schwerwassergewinnungsanlage in ihm während einer vorgegebenen Zeit das am Ende der letzten Betriebsperiode auskondensierte Wasser während einer vorgegebenen Zeit gespeichert.

Die Erfindung wird im folgenden anhand von in der Zeichnung dargestellten Ausführungsbeispielen erläutert.

Fig. 1 zeigt in schematischer Darstellung ein Fließschema einer Wasserstoffgewinnungsanlage, aus deren Ausgang mit Deuterium angereichertes Abwasser ausgeschieden wird,

die Fig. 2a–2c zeigen jeweils ein Fließschema einer Wasserstoffgewinnungsanlage mit drei separaten Speicherbehältern bei einem Betrieb in drei Betriebsperioden und

die Fig. 3a–3d jeweils ein Fließschema einer Wasserstoffgewinnungsanlage mit einem Speicherbehälter während verschiedener Betriebsperioden, in welchem angereichertes Abwasser entsprechend seiner Deuteriumkonzentration geschichtet gespeichert wird,

während in Fig. 4 ein Ausschnitt einer gegenüber Fig. 1 modifizierten Anlage dargestellt ist für die Durchführung des Prozesses mit Deuteriumrückgewinnung aus dem Wasserdampf des Synthesegasgemisches.

Fig. 5 zeigt ein Fließschema einer Wasserstoffgewinnungsanlage, in welcher aus Kohlenstoff, z. B. Koks und Wasser Wasserstoff gewonnen werden soll.

Die Fig. 1 soll lediglich zur Veranschaulichung einer Wasserstoffgewinnungsanlage der eingangs erwähnten Art dienen, aus deren Ausgang mit Deuterium angereichertes Wasser auskondensiert wird, das als Ausgangsprodukt für eine Anlage zur Gewinnung von schwerem Wasser dient.

Das Fließschema gemäß Fig. 1 zeigt einen Teil einer Anlage, in welcher ein aus Wasserstoff und Stickstoff bestehendes Synthesegasgemisch erzeugt werden soll, welches zur Gewinnung von Ammoniak in einer nicht dargestellten Syntheseanlage dient.

Es sei jedoch darauf hingewiesen, daß dieser Anwendungsfall nicht gravierend für die Erfindung ist, d. h., daß die Erfindung auch solche Fälle umfaßt, bei denen Wasserstoff für einen anderen Verwendungszweck, z. B. zur Erzeugung von Methanol gewonnen werden soll. In Fig. 1 wird in eine katalytische und thermische Anlage 1 durch eine Leitung 2 in einem Kompressor 3 auf Betriebsdruck verdichtetes Methan, durch eine Leitung 4 Luft und durch eine Leitung 5 erhitzter Hochdruckwasserdampf eingeleitet. Dieser Hochdruckwasserdampf wird folgendermaßen erzeugt. Während einer ersten Betriebsperiode wird durch eine Leitung 6 mittels einer Pumpe 7 Frischwasser in einen Dampferzeuger 8 gefördert. Das Frischwasser stammt beispielsweise aus einer natürlichen Wasserquelle, wie z. B. aus einem Fluß, einem See oder einem Meer.

Bekanntlich weist in der Natur vorkommendes Wasser eine Deuteriumkonzentration von ca. 130 bis 160 ppm $\left(\frac{D}{H+D}\right)$ auf.

Die Anlage 1 ist nur schematisch dargestellt, da es sich hierbei um eine in der Praxis übliche und bekannte Ausführungsform handelt.

Im wesentlichen besteht eine derartige Anlage jeweils aus einem Primärreformer, in welchem ein Katalysator, z. B. Nickeloxid enthalten ist, welchem erhitzter Hochdruckwasserdampf und Kohlenwasserstoff, z. B. Methan, zugeführt werden, einem sogenannten Sekundärreformer, in welchen Luft eingespeist wird und einem Konverter, in welchem eine chemische Reaktion stattfindet, die durch die Beziehung

$$CO + H_2O \rightarrow CO_2 + H_2$$

wiedergegeben wird.

Das die Anlage 1 verlassende Gemisch besteht im wesentlichen aus Wasserstoff, Wasserdampf, Kohlendioxid und Stickstoff und wird durch eine Leitung 9 in einen Kondensator 10 eingeleitet, worin aus dem Gemisch mit Deutium angereichertes Wasser abgetrennt wird.

Durch eine Leitung 11 wird das im wesentlichen aus Wasserstoff, Stickstoff, Kohlendioxid und noch Wasserdampfspuren enthaltende Gemisch, nachdem aus ihm in bekannter, nicht dargestellter Weise Kohlendioxid und Methan abgetrennt worden sind, in eine Ammoniaksyntheseanlage eingeleitet.

Das mit Deuterium angereicherte Abwasser, dessen Menge gegenüber der in die Anlage 1 eingespeisten Frischwassermenge aus an vorstehender Stelle genannten Gründen erheblich geringer ist, wird aus dem Kondensator 10 entnommen und dient als Ausgangsprodukt für eine Anlage zur Gewinnung von schwerem Wasser.

Anhand eines Zahlenbeispiels werden im folgenden die Deuteriumkonzentrationen und Durchsätze an den Stellen a1 bis a6 des Prozesses sowie der Trennfaktor $\alpha$ angegeben.

Zahlenbeispiel

| | Durchsatzmengen in kmol/h | | | | Deuteriumkonzentration in ppm $\left(\frac{D}{D+H}\right)$ | | | | $\alpha$ |
|---|---|---|---|---|---|---|---|---|---|
| | $H_2$ | $H_2O$ Dampf | $H_2O$ flüssig | $CH_4$ | $H_2$ | $H_2O$ Dampf | $H_2O$ flüssig | $CH_4$ | $H_2O/H_2$ |
| a2 | – | 5039 | – | – | – | 146 | – | – | – |
| a3 | – | – | – | 2215 | – | – | – | 146 | – |
| a4 | 4136 | 257 | 2861 | – | 107 | 197 | – | – | 1,84 |
| a5 | 4136 | 257 | – | – | 107 | 197 | – | – | – |
| a6 | – | – | 2861 | – | – | 197 | 197 | – | – |

In den Fig. 2a bis 2c ist jeweils das Fließschema einer Anlage während drei aufeinanderfolgenden Betriebsperioden dargestellt, die im Ausführungsbeispiel während eines Jahres (8000 Stunden) ablaufen.

Gegenüber Fig. 1 sind die Fig. 2a bis 2c insofern vereinfacht dargestellt, als der Kompressor für die Verdichtung des Methans und der Dampferzeuger 8 nicht eingezeichnet sind, da sie für das Verständnis der Erfindung nicht erforderlich sind. Außerdem ist auf die Darstellung von Umschaltventilen verzichtet.

Die mit der Fig. 1 übereinstimmenden Vorrichtungen sind mit den gleichen Bezugsziffern bezeichnet und mit einem Apostroph versehen.

In den mit der Wasserstoffgewinnungsanlage 1′ und dem Kondensator 10′ verbundenen Leitungssystemen sind eine Pumpe 12, drei Speicherbehälter 13, 14, 15 und ein Vorratsbehälter 16

angeordnet.

Unterhalb der Fließschemen ist jeweils eine Zeitskala mit den drei Betriebsperioden I bis III angegeben, wobei die jeweils ablaufende Betriebsperiode voll ausgezogen ist.

Das Ausführungsbeispiel soll ebenfalls für einen Prozeß zur Gewinnung von Wasserstoff zur Erzeugung von Ammoniak gelten.

Während der ersten Betriebsperiode I, deren Dauer frei wählbar ist, und die im später angegebenen Zahlbeispiel 4232 Stunden betragen soll, wird, wie anhand von Fig. 1 beschrieben, verdampftes Frischwasser mit natürlicher Deuteriumkonzentration durch Leitung 6' in die Wasserstoffgewinnungsanlage 1' eingeleitet. Die Menge des im Kondensator 10' abgetrennten, an Deuterium angereicherten Abwassers beträgt aufgrund der in der Anlage stattfindenden chemischen Reaktionen nur die Hälfte des eingespeisten Frischwassers und wird von der Pumpe 12 in den Speicherbehälter 13 gefördert, der entsprechend dieser Menge dimensioniert ist.

Während der zweiten Betriebsperiode II wird anstelle von Frischwasser das im Behälter 13 gespeicherte Abwasser mittels Pumpe 7' in die Anlage 1' entleert, nachdem es in nicht dargestellter Weise verdampft worden ist. Da die Durchsätze aller Komponenten in der Anlage 1' während der gesamten Betriebszeit gleich groß sind, da die Anlage während dieser Zeit ständig mit Vollast gefahren wird, ist die Betriebsperiode II nur halb so lang wie die Betriebsperiode I. Nachdem das weiter an Deuterium angereicherte Abwasser im Kondensator 10' aus dem Gemisch abgetrennt worden ist, wird es im Behälter 14, der halb so groß wie Behälter 13 ist, gespeichert.

Während der dritten Betriebsperiode III, die wiederum nur halb so lang wie die zweite Betriebsperiode II ist, wird das Abwasser aus dem Behälter 14 in die Anlage 1' dampfförmig eingeleitet und das sich bei der Wasserstoffgewinnung weiter an Deuterium anreichernde Abwasser in einen Behälter 15 eingespeist, aus welchem es in einen Vorratsbehälter 16 von gleicher Größe wie Behälter 15 eingeleitet wird.

Während der gesamten Betriebszeit wird angereichertes Abwasser aus dem Behälter 16 als Ausgangsprodukt einer Anlage zur Gewinnung von schwerem Wasser zugeführt.

Die Zuführung kann beispielsweise durch Leitungen erfolgen, oder falls sich die Schwerwasseranlage an einem Ort größerer Entfernung befindet, auch mit beweglichen Transportmitteln, wie beispielsweise Lastwagen, zu der Schwerwasseranlage gebracht werden.

Der zusätzliche Vorratsbehälter 16 dient dazu, daß auch bei kurzzeitigem Stillstand der Wasserstoffgewinnungsanlage, beispielsweise infolge von Stromausfällen, die Schwerwassergewinnungsanlage kontinuierlich weiter betrieben werden kann. Die Bemessung des Vorratsbehälters richtet sich hierbei nach der gewünschten ununterbrochenen Betriebszeit der Schwerwassergewinnungsanlage.

Es versteht sich, daß vor der ersten Inbetriebnahme der Schwerwassergewinnungsanlage der Vorratsbehälter mit der gewünschten Menge an angereichertem Wasser gefüllt werden muß, und zwar vorteilhaft dadurch, daß er während einer entsprechenden Zeit aus der Wasserstoffgewinnungsanlage gefüllt wird, bevor die Schwerwassergewinnungsanlage in Betrieb genommen wird.

Eine andere Möglichkeit besteht darin, den Behälter 15 entsprechend groß zu dimensionieren, so daß der zusätzliche Vorratsbehälter 16 in Wegfall kommt.

Im folgenden wird ein Zahlenbeispiel für einen Prozeß angegeben, wie er in einer Anlage mit drei Betriebsperioden durchgeführt werden kann.

Zahlenbeispiel

| Betriebsperioden | Betriebsstunden | Referenzpunkte | Durchsatz von Wasserstoff (kmol/h) | | | | Deuteriumkonzentration in ppm (D/D + H) | | | |
|---|---|---|---|---|---|---|---|---|---|---|
| | | | $H_2$ | $H_2O$ Dampf | $H_2O$ flüssig | $CH_4$ | $H_2$ | $H_2O$ Dampf | $H_2O$ flüssig | $CH_4$ |
| I | 4232 (siehe Fig. 2a) | $a_2$ | – | – | 5039 | – | – | – | 146 | – |
| | | $a_3$ | – | – | – | 2215 | – | – | – | 146 |
| | | $a_4$ | 4136 | 257 | 2861 | – | 107 | 197 | 197 | – |
| | | $a_5$ | 4136 | 257 | – | – | 107 | 197 | – | – |
| | | $a_6$ | – | – | 2861 | – | – | – | 197 | – |
| II | 2403 (siehe Fig. 2b) | $a_2$ | – | – | 5039 | – | – | – | 197 | – |
| | | $a_3$ | – | – | – | 2215 | – | – | – | 146 |
| | | $a_4$ | 4136 | 257 | 2861 | – | 134 | 246 | 246 | |
| | | $a_5$ | 4136 | 257 | – | – | 134 | 246 | – | – |
| | | $a_6$ | – | – | 2861 | – | – | – | 246 | – |
| III | 1365 (siehe Fig. 2c) | $a_2$ | – | – | 5039 | – | – | – | 246 | – |
| | | $a_3$ | – | – | – | 2215 | – | – | – | 146 |
| | | $a_4$ | 4136 | 257 | 2861 | – | 158 | 291 | 291 | – |
| | | $a_5$ | 4136 | 257 | – | – | 158 | 291 | – | – |
| | | $a_6$ | – | – | 2861 | – | – | – | 291 | – |

Zusammenfassung

| Betriebsperioden | Betriebsstunden | Speicherbehälter | Inhalt der Speicherbehälter ($m^3$) | Deuteriumkonzentration in ppm $\left(\frac{D}{D+H}\right)$ in den Behältern |
|---|---|---|---|---|
| I | 4232 | 13 | 217 966 | 197 |
| II | 2403 | 14 | 123 754 | 246 |
| III | 1365 | 15 | 70 264 | 291 |
| Total | 8000 | | 411 984 | |

Die angenommene Ausbeute des Speisewassers in der Schwerwasseranlage ist 0,75.

Hieraus ergibt sich im vorliegenden Zahlenbeispiel die jährliche Schwerwasserproduktion von 17 034 kg/Jahr.

Die spezifische Schwerwasserproduktion a bezogen auf das Speisewasser beträgt

$$2{,}42 \cdot 10^{-4}\ \text{kg}\ D_2O/H_2O$$

Wie aus vorstehendem Zahlenbeispiel hervorgeht, steigt die Deuteriumkonzentration des als Ausgangsprodukt für eine Schwerwassergewinnungsanlage zugeführten Abwassers mit der Anzahl der Betriebsperioden, während der Abwasserdurchsatz sinkt. Je nach Bedarf kann somit entweder ein größerer Durchsatz für die Schwerwasseranlage mit geringerer Deuteriumkonzentration oder ein kleinerer Durchsatz mit entsprechend höherer Deuteriumkonzentration gemäß dem erfindungsgemäßen Verfahren gewonnen werden.

Im folgenden werden in einer Zusammenfassung Zahlenbeispiele für sieben Fälle angegeben, aus welchen der vorstehende Sachverhalt anschaulich hervorgeht.

In allen Fällen beträgt die gesamte Betriebszeit ein Jahr, d. h. 8000 Stunden.

Im ersten Fall wird die gesamte Betriebszeit von einer einzigen Betriebsperiode ausgefüllt analog zu Fig. 1. Im zweiten Fall besteht die Betriebszeit aus zwei Betriebsperioden mit zwei Speicherbehältern, wobei die Daten für die zweite Betriebsperiode angegeben sind, im dritten Fall aus drei Betriebsperioden, wobei die Daten für die dritte Betriebsperiode angegeben sind usw.

Zahlenbeispiel

| Betriebsperioden | Anzahl Betriebsstunden für die letzte Betriebsperiode | Jährliche Produktion von angereichertem Wasser (kg/Jahr) | Deuteriumkonzentration in ppm $\left(\frac{D}{D+H}\right)$ | Durchsatz am Eintritt der Schwerwassergewinnungsanlage (kg/h) | Schwerwasserproduktion (kg/Jahr) | $a \cdot 10^{-4}$ $\left(kg \frac{D_2O}{H_2O}\right)$ |
|---|---|---|---|---|---|---|
| I | 8000 | 412 $10^6$ | 197 | 51 498 | 67 761 | 1,649 |
| II | 2897 | 142,2 $10^6$ | 246 | 18 651 | 30 538 | 2,046 |
| III | 1364 | 70,2 $10^6$ | 291 | 8 783 | 17 034 | 2,421 |
| IV | 706 | 36,4 $10^6$ | 335 | 4 546 | 10 138 | 2,787 |
| V | 381 | 19,7 $10^6$ | 373 | 2 458 | 6 210 | 3,111 |
| VI | 211 | 10,9 $10^6$ | 411 | 1 359 | 3 723 | 3,424 |
| VII | 118 | 6,1 $10^6$ | 446 | 760 | 2 261 | 3,718 |

In den Fig. 3a bis 3d ist ein Ausführungsbeispiel dargestellt, bei welchem zur Durchführung des erfindungsgemäßen Verfahrens nur ein Speicherbehälter verwendet wird, sowie ein zweiter Behälter, in welchen das während der letzten Betriebsperiode gewonnene Abwasser eingeleitet wird.

Ebenfalls wie bei den Fig. 2a bis 2c sind die Fig. 3a bis 3d insofern vereinfacht dargestellt, als der Kompressor 3 für die Verdichtung des Methans und der Dampferzeuger 8 nicht eingezeichnet sind.

Die mit der Fig. 1 bzw. den Fig. 2a bis 2d übereinstimmenden Vorrichtungen sind mit den gleichen Bezugsziffern bezeichnet und mit einem Doppel-Apostroph versehen.

Im vorliegenden Ausführungsbeispiel ist es nicht erforderlich, für n Betriebsperioden n Speicherbehälter wie bei dem in den Fig. 2a bis 2d dargestellten Ausführungsbeispiel zu verwenden, sondern nur einen Speicherbehälter 20, dessen Volumen so bemessen ist, daß er die während der ersten Betriebsperiode I' erzeugte Abwassermenge aufnehmen kann, sowie einen zweiten Behälter 16", aus welchem das am stärksten mit Deuterium angereicherte Abwasser, einer Anlage zur Gewinnung von schwerem Wasser zugeführt wird.

Der Speicherbehälter 20 muß so ausgebildet sein, daß das in der Wasserstoffgewinnungsanlage 1" erzeugte und im Kondensator 10" abgetrennte, mit Deuterium angereicherte Abwasser geschichtet gespeichert werden kann, so daß keine Durchmischung des während der einzelnen Betriebsperioden gespeicherten Abwassers eintreten kann.

Dieses kann beispielsweise durch geeignete Abmessungen, wie große Länge und kleiner Durchmesser oder mit Hilfe von schikanenartigen Einbauten erreicht werden oder mit Hilfe von anderen Maßnahmen, wie sie aus dem Gebiet der Warmwasser- oder Kältespeicherungstechnik bekannt sind.

Die Fig. 3a bis 3d zeigen die Anlage in folgenden Betriebszuständen.

Fig. 3a am Anfang der Betriebsperiode I',
Fig. 3b am Anfang der Betriebsperiode II',
Fig. 3c am Anfang der Betriebsperiode III' und
Fig. 3d am Ende der Betriebsperiode III'.

Vor Inbetriebsetzung der Schwerwassergewinnungsanlage wird der Vorratsbehälter 16" analog wie anhand der Fig. 2a bis 2c beschrieben, mit angereichertem Abwasser gefüllt, welches als Ausgangsprodukt für die Gewinnung von schwerem Wasser, beispielsweise während eines Jahres ausreicht. Es sei darauf hingewiesen, daß die Deuteriumkonzentration des Abwassers im Behälter 16" ebenso wie im Behälter 16 im zweiten Ausführungsbeispiel stets konstant ist.

Um eine Außerbetriebnahme der Schwerwassergewinnungsanlage zu verhindern, wenn die Wasserstoffgewinnungsanlage kurzzeitig, beispielsweise bei Stromunterbruch ausfällt, ist es zweckmäßig, den Vorratsbehälter 16" – bereits an vorstehender Stelle erwähnt – entsprechend überzudimensionieren.

Im folgenden wird die Betriebsweise der Anlage zur Durchführung eines erfindungsgemäßen Prozesses beschrieben.

Da auch im vorliegenden Fall für das Ausführungsbeispiel eine Wasserstoffgewinnungsanlage aus Methan und Wasser Anwendung finden soll, welche zur Gewinnung von Wasserstoff als Komponente für ein Synthesegasgemisch erzeugt wird, aus welchem Ammoniak gewonnen werden soll, verhalten sich die Speisewassermengen zu den Abwassermengen jeweils wie 2 : 1, so daß die aufeinanderfolgenden Betriebsperioden jeweils um die Hälfte verkürzt sind.

Soll der Wasserstoff in der Wasserstoffgewinnungsanlage aus anderen Kohlenwasserstoffen oder für einen anderen Zweck verwendet werden, würde sich entsprechend der Gleichgewichtskonstanten der bei der Wasserstofferzeugung ablaufenden chemischen Reaktionen das Verhältnis der in die Anlage jeweils eingespeisten Speisewassermenge zu der Abwassermenge entsprechend ändern und hiermit auch der Zeitfaktor der einzelnen Betriebsperioden.

Im vorliegenden Fall wird der Ablauf von drei Betriebsperioden beschrieben, wobei am Ende der dritten Periode der geforderte Jahresdurchsatz für die Schwerwassergewinnungsanlage erzeugt ist.

Jedoch sei darauf hingewiesen, daß die Anlage selbstverständlich während einer größeren Anzahl von Betriebsperioden betrieben werden kann, die nur dadurch aus rein praktischen Gründen begrenzt ist, daß bei zunehmender Anzahl der Betriebsperioden zwar die Deuteriumkonzentration des Ausgangsproduktes immer weiter ansteigt, jedoch seine Menge entsprechend sinkt.

Während der ersten Betriebsperiode I' wird Frischwasser mit natürlicher Deuteriumkonzentration durch Leitung 6" mittels Pumpe 7" in die Anlage 1" eingespeist, dort analog zu dem ersten Ausführungsbeispiel mit Methan und Luft in Kontakt gebracht, aus dem entstehenden Gemisch im Kondensator 10" Abwasser abgetrennt und damit der Speicherbehälter 20 gefüllt.

Am Ende dieser Betriebsperiode wird die Speisung von Frischwasser auf Speicherwasser (Abwasser aus der Periode I') umgeschaltet. Der Speicherbehälter 20 bleibt mit dem Kondensator 10" verbunden (siehe Fig. 3b, die den Anfang der Betriebsperiode II' zeigt).

Während der zweiten Betriebsperiode II', die sich direkt an die erste Betriebsperiode anschließt, wird im vorliegenden Ausführungsbeispiel die Hälfte der im Behälter 20 gespeicherten Abwassermenge in die Anlage 1" eingespeist.

Da die Anlage 1" ständig, wie beim ersten Ausführungsbeispiel, bei Vollast betrieben werden soll, sind die Durchsätze während der ganzen Betriebszeit von beispielsweise einem Jahr (8000 Stunden) konstant, so daß die Betriebsperiode II' halb so lange wie die Betriebsperiode I' ist.

Bei n Betriebsperioden (im Ausführungsbeispiel ist $n = 3$) leert sich der Speicherbehälter 20 während der folgenden $(n - 1)$ Betriebsperioden.

Es entstehen im Speicherbehälter Schichten aus Abwasser mit verschiedenen Deuteriumkonzentrationen, die sich während des Prozesses durch den Speicherbehälter und die Wasserstoffgewinnungsanlage bewegen.

Hierbei sind keine Umschaltungen im Leitungssystem, wie bei dem in den Fig. 2a bis 2c dargestellten System erforderlich, bis am Ende der Betriebsperiode $n-1$, im vorliegenden Fall Betriebsperiode II'.

Von diesem Zeitpunkt an, wird aus dem Kondensator 10" Abwasser nicht mehr in den Speicherbehälter 20 eingespeist, sondern in den Vorratsbehälter 16" (vergl. Fig. 3c und 3d).

Während der Betriebsperiode n wird die Wasserstoffgewinnungsanlage noch aus dem Speicherbehälter 20 gespeist, der sich hierbei vollständig entleert.

Das für das in den Fig. 2a – 2c dargestellte Ausführungsbeispiel angegebene Zahlenbeispiel gilt bei gleichen Durchsätzen auch für das vorstehend beschriebene Ausführungsbeispiel.

Da in den Kondensatoren (10' bzw. 10" in den Fig. 2a bis 2c und Fig. 3a bis 3d) der Wasserdampf nicht vollständig auskondensiert wird, enthält das gas- bzw. dampfförmige Wasserstoff enthaltende Gemisch, das aus den Kondensatoren weggeführt wird, noch eine, wenn auch geringe Menge an Wasserdampf. Dieser Wasserdampf weist die gleiche Deuteriumkonzentration auf, wie das im Kondensator abgetrennte Abwasser.

Es ist schon bei einem Prozeß, wie er in der eingangs erwähnten CH-A-616 602 beschrieben ist,

vorgeschlagen worden, das im Wasserdampf enthaltene Deuterium für das als Ausgangsprodukt für eine Anlage zur Gewinnung von schwerem Wasser dienende Abwasser zurückzugewinnen.

Diese Rückgewinnung von Deuterium kann auch bei dem erfindungsgemäßen Prozeß vorgenommen werden und zwar in der Weise, daß von dem Restwasserdampf aus dem während der einzelnen Betriebsperioden gewonnenen Gemisch, nachdem das Abwasser aus ihm auskondensiert und der Wasserstoff abgetrennt worden ist, durch Isotopenaustausch Deuterium auf Frischwasser übertragen wird, und daß das so angereicherte Frischwasser jeweils dem aus dem Kondensator entnommenen Abwasser zugegeben wird.

Diese Ausführungsweise wird anhand eines in Fig. 4 dargestellten Fließschemas, welches gegenüber der Fig. 1 entsprechend modifiziert worden ist, im folgenden erläutert.

Die mit der Fig. 1 übereinstimmenden Anlagenelemente sind mit den gleichen Bezugsziffern bezeichnet und werden zur Vermeidung von Wiederholungen nicht mehr erläutert.

Das im wesentlichen Wasserstoff, Stickstoff, Kohlendioxid und noch Wasserdampfspuren enthaltende Gemisch wird aus dem Kondensator 10 in eine Kohlendioxid-Abtrenneinrichtung 21 bekannter Bauart (vergl. z. B. Chemical Engineering Progress/Vol. 70/No. 2/.February 1974, S. 57, Fig. 4) eingespeist.

Anschließend wird das Gemisch in einen Methanator 22 üblicher Bauart eingespeist, in welchem chemische Reaktionen, die durch die Beziehungen

$$CO + 3H_2 \rightarrow CH_4 + H_2O \text{ und}$$

$$CO_2 + 4H_2 \rightarrow CH_4 + 2H_2O$$

wiedergegeben werden, stattfinden.

Frischwasser mit natürlicher Deuteriumkonzentration wird aus einer zusätzlichen Wasserquelle mittels einer Pumpe 24 in eine Austauschkolonne 23 eingeleitet und dort in Isotopenaustausch mit aus der Kohlendioxid-Abtrenneinrichtung 21 entnommenen, mit Deuterium angereichertem Wasserdampf, gebracht, wobei sich das Frischwasser mit Deuterium anreichert.

Aus der Austauschkolonne 23 wird der Wasserdampf, nach seiner Abreicherung an Deuterium, zusammen mit dem Kohlendioxid aus der Anlage weggeführt.

Das angereicherte Wasser wird sodann in die Entnahmeleitung des Kondensators 10 gefördert und mit dem Abwasser zusammengeführt.

Bezogen auf die in den Fig. 2a bis 2c bzw. 3a bis 3d dargestellten Ausführungsbeispiele werden während der gesamten Betriebszeit während der einzelnen Betriebsperioden somit die im Kondensator 10′ bzw. 10″ entnommenen Abwasserdurchsätze durch die zugeführten, angereicherten Frischwasserdurchsätze erhöht.

Dieses bedingt lediglich eine entsprechend größere Dimensionierung der Speicherbehälter 13—15 bzw. 20 und Vorratsbehälter 16 bzw. 16″.

Es steht somit ein größerer Durchsatz an angereichertem Wasser als Ausgangsprodukt für die Schwerwassergewinnungsanlage zur Verfügung. Das Ausgangsprodukt weist in diesem Fall zwar eine etwas geringere Deuteriumkonzentration auf, da die Deuteriumkonzentration des angereicherten Frischwassers nicht so hoch ist wie die Deuteriumkonzentration des dem Kondensator 10′ bzw. 10″ entnommenen Abwassers.

In Fig. 5 ist schematisch das Fließschema einer gegenüber den vorstehend beschriebenen Ausführungsbeispielen modifizierten Anlage zur Wasserstoffgewinnung dargestellt. Mit einer derartigen Anlage kann ebenfalls der erfindungsgemäße Prozeß zur Gewinnung von angereichertem Abwasser als Ausgangsprodukt für eine Schwerwassergewinnungsanlage verbunden werden.

So kann beispielsweise dieser Prozeß in den Fig. 2a bis 2c oder wie in den Fig. 3a bis 3d ausgebildet sein, ohne daß zur Vermeidung von Wiederholungen nochmals im einzelnen hierauf eingegangen wird.

Die Wasserstoffgewinnungsanlage 30 gemäß Fig. 5 ist als Wassergaserzeuger ausgebildet, in welchen durch eine Förderleitung 31 Kohlenstoff, vorteilhaft Koks, eingeleitet, in der Anlage 30 zum Glühen gebracht wird und in die Anlage durch eine Leitung 32 mittels einer Pumpe 33 Wasser eingeleitet wird.

Im Wassergaserzeuger 30 finden dann in an sich bekannter Weise folgende Reaktionen statt:

$$C + H_2O \rightarrow CO + H_2$$

$$C + 2H_2O \rightarrow CO_2 + 2H_2$$

Das Gemisch wird durch eine Leitung 34 in eine Verbrennungsvorrichtung 35 eingeleitet, hierin unter Zufuhr von Luft durch eine Leitung 36 z. B. unter Anwesenheit eines Katalysators, beispielsweise Pt, teilweise verbrannt.

In einem Wärmetauscher 37 wird das Gemisch gekühlt und dabei Wärme, z. B. zur Dampferzeugung zurückgewonnen. Aus dem Gemisch wird in einem Kondensator 38 Abwasser abgetrennt und durch

eine Leitung 39 aus der Anlage weggeführt und beispielsweise in einem Prozeß, wie er anhand der Fig. 2a bis 2c oder Fig. 3a bis 3d beschrieben ist, weiterbehandelt, bevor das der letzten Betriebsperiode entnommene Abwasser als Ausgangsprodukt einer Schwerwassergewinnungsanlage zugeführt wird.

Aus dem Wasserabscheider wird das aus Kohlendioxid, Wasserstoff, Stickstoff und Restwasserdampf bestehende Gemisch seiner weiteren Verwendung zugeführt.

Bei der Anwendung einer solchen Anlage im Zusammenhang mit dem erfindungsgemäßen Prozeß kann wegen der unvollständigen Verbrennung das Verhältnis von Speisewasser zu Abwasser frei gewählt werden und außerdem aufgrund der tieferen Temperaturen in der Verbrennungsvorrichtung ein höherer Trennfaktor $\alpha$ von beispielsweise 2,03 bei ca. 300° C erreicht werden.

Im folgenden wird ein Zahlenbeispiel für eine Betriebszeit von 8000 Stunden (1 Jahr) und drei Betriebsperioden angegeben.

Zahlenbeispiel

für drei Betriebsperioden für eine gesamte Betriebszeit von 8000 Stunden

| Betriebsperioden | Anzahl Betriebsstunden für die letzte Betriebsperiode | Referenzpunkte | Durchsatz von Wasserstoff (kmol/h) | | | | Deuteriumkonzentration in ppm (D/D + H) | | |
|---|---|---|---|---|---|---|---|---|---|
| | | | $H_2$ | $H_2O$ Dampf | $H_2O$ flüssig | C | $H_2$ | $H_2O$ Dampf | $H_2O$ flüssig |
| I | 4737 | $b_1$ | – | – | 33 332 | – | – | – | 146 |
| | | $b_2$ | – | – | – | 8333 | – | – | – |
| | | $b_3$ | 16 666 | 16 666 | – | – | 97 | 196 | – |
| | | $b_4$ | 16 666 | 1 036 | – | – | 97 | 196 | – |
| | | $b_5$ | – | – | 15 630 | – | – | – | 196 |
| II | 2221 | $b_1$ | – | – | 33 332 | – | – | – | 196 |
| | | $b_2$ | – | – | – | 8333 | – | – | – |
| | | $b_3$ | 16 666 | 16 666 | – | – | 129 | 262 | – |
| | | $b_4$ | 16 666 | 1 036 | – | – | 129 | 262 | – |
| | | $b_5$ | – | – | 15 630 | – | – | – | 262 |
| III | 1042 | $b_1$ | – | – | 33 332 | – | – | – | 262 |
| | | $b_2$ | – | – | – | 8333 | – | – | – |
| | | $b_3$ | 16 666 | 16 666 | – | – | 173 | 350 | – |
| | | $b_4$ | 16 666 | 1 036 | – | – | 173 | 350 | – |
| | | $b_5$ | – | – | 15 630 | – | – | – | 350 |

Zusammenfassung

| Betriebsperioden | Betriebsstunden | Inhalt der Speicherbehälter ($m^3$) | Deuteriumkonzentration in ppm (D/D + H) in den Behältern |
|---|---|---|---|
| I | 4737 | 1 332 707 | 196 |
| II | 2221 | 624 856 | 262 |
| III | 1042 | 293 156 | 350 |
| Total | 8000 | 2 250 719 | |

Diese Tabelle ist analog zu der Tabelle auf der Seite 15 zu interpretieren.

Zahlenbeispiel

für sieben Betriebsperioden für eine gesamte Betriebszeit von 8000 Stunden

| Betriebsperioden | Anzahl Betriebsstunden für die letzte Betriebsperiode | Jährliche Produktion von angereichertem Wasser (kg/Jahr) | Deuteriumkonzentration in ppm $\left(\frac{D}{D+H}\right)$ | Durchsatz am Eintritt der Schwerwassergewinnungsanlage (kg/h) | Schwerwasserproduktion (kg/Jahr) | $a \cdot 10^{-4}$ $\left(kg\,\frac{D_2O}{H_2O}\right)$ |
|---|---|---|---|---|---|---|
| I | 8000 | 2251 $10^6$ | 196 | 281 350 | 366 675 | 1,629 |
| II | 2554 | 718 $10^6$ | 262 | 89 816 | 156 742 | 2,181 |
| III | 1042 | 293 $10^6$ | 350 | 36 634 | 85 607 | 2,921 |
| IV | 460 | 129 $10^6$ | 469 | 16 191 | 50 662 | 3,911 |
| V | 210 | 59 $10^6$ | 628 | 7 393 | 30 976 | 5,237 |
| VI | 97 | 27 $10^6$ | 842 | 3 425 | 19 214 | 7,013 |
| VII | 46 | 13 $10^6$ | 1127 | 1 616 | 12 143 | 9,390 |

**Patentansprüche**

1. Verfahren zur Herstellung von mit Deuterium angereichertem Wasser bei Gewinnung von Wasserstoff durch katalytische und/oder thermische Spaltung in einer Synthesegasanlage, wobei der Anlage außer Kohlenstoff oder ein oder mehrere Kohlenwasserstoffe eine Überschußmenge an Wasser bzw. Wasserdampf zugeführt wird, und das die Anlage verlassende Gemisch in die gasförmigen und flüssigen Komponenten getrennt, das dabei gewonnene, aus Abwasser bestehende, mit Deuterium angereicherte Kondensat isoliert und einer Anlage für Gewinnung von schwerem Wasser zugeführt wird, dadurch gekennzeichnet, daß die Synthesegasanlage in mindestens zwei zeitlich aufeinanderfolgenden Betriebsperioden derart betrieben wird, daß in der ersten Betriebsperiode Frischwasser im Überschuß in die Synthesegasanlage eingeleitet wird, und daß das aus dem gewonnenen Gemisch auskondensierte Abwasser gespeichert wird, und daß die gespeicherte Abwassermenge, die gegenüber der während der ersten Betriebsperiode eingespeisten Frischwassermenge entsprechend der weggeführten Wasserstoffmenge entsprechend vermindert ist, während der entsprechend verkürzten zweiten Betriebsperiode in die Synthesegasanlage als einziges Speisewasser eingeleitet wird und dort mit Kohlenstoff bzw. Kohlenwasserstoff bzw. Kohlenwasserstoffen in Kontakt gebracht wird, wobei die Durchsätze aller Komponenten gleich groß wie bei der ersten Betriebsperiode sind, und daß das nach der zweiten bzw. letzten Betriebsperiode aus dem Gemisch gewonnene, auskondensierte Abwasser der Anlage zur Gewinnung von

Schwerwasser zugeführt wird.

2. Verfahren nach Anspruch 1, dadurch gekennzeichnet, daß während der aufeinanderfolgenden Betriebsperioden das jeweils gewonnene Abwasser in jeweils einem separaten Behälter gespeichert wird, welcher während der darauffolgenden Betriebsperiode in die Synthesegasanlage entleert wird, und daß das während der letzten Betriebsperiode auskondensierte Abwasser in einen Speicherbehälter eingeleitet wird, aus welchem es der Anlage zur Gewinnung von schwerem Wasser zugeführt wird.

3. Verfahren nach Anspruch 2, dadurch gekennzeichnet, daß das am Ende der letzten Betriebsperiode auskondensierte Abwasser vor seiner Einleitung in die Anlage zur Gewinnung von schwerem Wasser während einer vorgegebenen Zeit gespeichert wird.

4. Verfahren nach Anspruch 1, dadurch gekennzeichnet, daß das während der aufeinanderfolgenden Betriebsperioden jeweils gewonnene Abwasser in einem ersten Behälter entsprechend seiner Deuteriumkonzentration geschichtet gespeichert und aus diesem Behälter außer während der letzten Betriebsperiode Abwasser in die Synthesegasanlage eingeleitet wird, wobei das Abwasser jeweils in die an Deuterium reichste Schicht eingespeist und das Speisewasser jeweils aus der an Deuterium ärmsten Schicht entnommen wird, und daß das während der letzten Betriebsperiode gewonnene, auskondensierte Abwasser in einen zweiten Behälter eingeleitet wird, aus welchem es der Anlage zur Gewinnung von schwerem Wasser zugeführt wird.

5. Verfahren nach Anspruch 1, dadurch gekennzeichnet, daß von dem Restwasserdampf aus dem während der einzelnen Betriebsperioden gewonnenen Gemisch, nachdem das Abwasser aus ihm auskondensiert und der Wasserstoff abgetrennt worden ist, durch Isotopenaustausch Deuterium auf Frischwasser übertragen wird, und daß das so angereicherte Frischwasser jeweils dem aus dem Kondensator entnommenen Abwasser zugegeben wird.

## Claims

1. A process for the preparation of deuterium-enriched water in the production of hydrogen by catalytic and/or thermal cracking in a synthesis gas plant, water or steam in excess being fed to the plant in addition to carbon or one or more hydrocarbons, the mixture which leaves the plant being separated into the gaseous and liquid components and the deuterium-enriched condensate which is obtained in these conditions and which consists of waste water is isolated and fed to a heavy-water production plant, characterised in that the synthesis gas plant is operated in at least two consecutive periods, during the first of which fresh water in excess is introduced into the synthesis gas plant and the waste water condensed out of the mixture obtained is stored, and the amount of waste water stored which, by comparison with the amount of fresh water introduced during the first period of operation, is reduced by an amount corresponding to the hydrogen removed, is introduced into the synthesis gas plant as the sole feed water during the correspondingly shortened second period of operation, and is brought into contact with carbon, hydrocarbon, or hydrocarbons in said plant, the throughputs of all the components being equal to those in the first period of operation, and the waste water which has condensed out and been obtained from the mixture after the second or final period of operation is fed to the heavy water production plant.

2. A process according to claim 1, characterised in that the waste water obtained in each of the consecutive periods of operation is stored in a separate tank in each case, said tanks being emptied into the synthesis gas plant during the subsequent period of operation, and the waste water condensed out during the last period of operation is fed to a storage tank from which it is fed to the heavy-water production plant.

3. A process according to claim 2, characterised in that the water that has condensed out at the end of the last period of operation is stored for a predetermined period before being introduced into the heavy-water production plant.

4. A process according to claim 1, characterised in that the waste water obtained during each of the consecutive periods of operation is stored in a first tank in layers according to its deuterium concentration and waste water is introduced from this tank into the synthesis gas plant except during the last period of operation, the waste water being introduced in each case into the layer richest in deuterium and the feed water being taken in each case from the layer having the lowest deuterium concentration, and the condensedout waste water obtained during the last period of operation is fed to a second tank from which it is fed to the heavy-water production plant.

5. A process according to claim 1, characterised in that deuterium is transferred to fresh water by isotope exchange from the residual steam from the mixture obtained during the individual periods of operation, the said transfer being effected after the waste water is condensed out of said mixture and the hydrogen has been separated, and the fresh water thus enriched is added to each amount of waste water taken from the condenser.

**Revendications**

1. Procédé pour produire de l'eau enrichie en deutérium lors de l'obtention d'hydrogène par décomposition catalytique et/ou thermique dans une installation produisant du gaz de synthèse, à laquelle on fait arriver, en plus de carbone ou d'un ou plusieurs hydrocarbures, une quantité en excès d'eau ou de vapeur d'eau, et on divise le mélange sortant de l'installation en ses composants gazeux et liquides, on isole le condensat obtenu à cette occasion, formé d'eau résiduaire, enrichi en deutérium et on l'envoie à une installation pour l'obtention d'eau lourde, caractérisé en ce qu'on fait fonctionner l'installation contenant du gaz de synthèse en au moins deux périodes se succédant dans le temps, de telle sorte que dans la première période de fontionnement, de l'eau neuve est introduite en excès dans l'installation produisant le gaz de synthèse et l'eau résiduaire condensée du mélange obtenu est accumulée, et la quantité accumulée d'eau résiduaire, qui est réduite proportionnellement à la quantité d'hydrogène enlevée par rapport à la quantité d'eau neuve injectée pendant la première période de fonctionnement, est introduite pendant la seconde période de fonctionnement raccourcie en conséquence dans l'installation produisant le gaz de synthèse comme unique eau d'alimentation et y entre en contact avec du carbone ou un ou plusieurs hydrocarbures, les débits de tous les composants étant de même grandeur que lors de la première période de fonctionnement, et l'eau résiduaire condensée obtenue à partir du mélange après la seconde ou dernière période de fonctionnement est envoyée à l'installation pour l'obtention d'eau lourde.

2. Procédé suivant la revendication 1, caractérisé en ce que l'eau résiduaire obtenue pendant chacune des périodes successives de fonctionnement est accumulée à chaque fois dans un récipient séparé qui est vidé pendant la période de fonctionnement subséquente dans l'installation produisant du gaz de synthèse, et l'eau résiduaire condensée pendant la dernière période de fonctionnement est introduite dans un récipient accumulateur duquel elle est envoyée à l'installation pour l'obtention d'eau lourde.

3. Procédé suivant la revendication 2, caractérisé en ce que l'eau résiduaire condensée à la fin de la dernière période de fonctionnement est accumulée avant son introduction dans l'installation pour l'obtention d'eau lourde pendant une période prédéterminée.

4. Procédé suivant la revendication 1, caractérisé en ce que l'eau résiduaire obtenue pendant chacune des périodes successives de fonctionnement est accumulée en couches dans un premier récipient conformément à sa concentration en deutérium et introduite depuis ce récipient dans l'installation produisant du gaz de synthèse, sauf pendant la dernière période de fonctionnement, l'eau résiduaire étant injectée dans quaque cas dans la couche la plus riche en deutérium et l'eau d'alimentation étant prélevée dans chaque cas dans la couche la plus pauvre en deutérium, et l'eau résiduaire condensée obtenue pendant la dernière période de fonctionnement est introduite dans le second récipient duquel elle est envoyée à l'installation d'obtention d'eau lourde.

5. Procédé suivant la revendication 1, caractérisé en ce que du deutérium est transféré par échange isotopique à l'eau neuve depuis la vapeur d'eau résiduelle provenant du mélange obtenu pendant les périodes individuelles de fonctionnement, après que l'eau résiduaire en a été séparée par condensation et que l'hydrogène en a été enlevé, et l'eau neuve ainsi enrichie est ajoutée dans chaque cas à l'eau résiduaire prélevée dans le condenseur.

Fig. 1

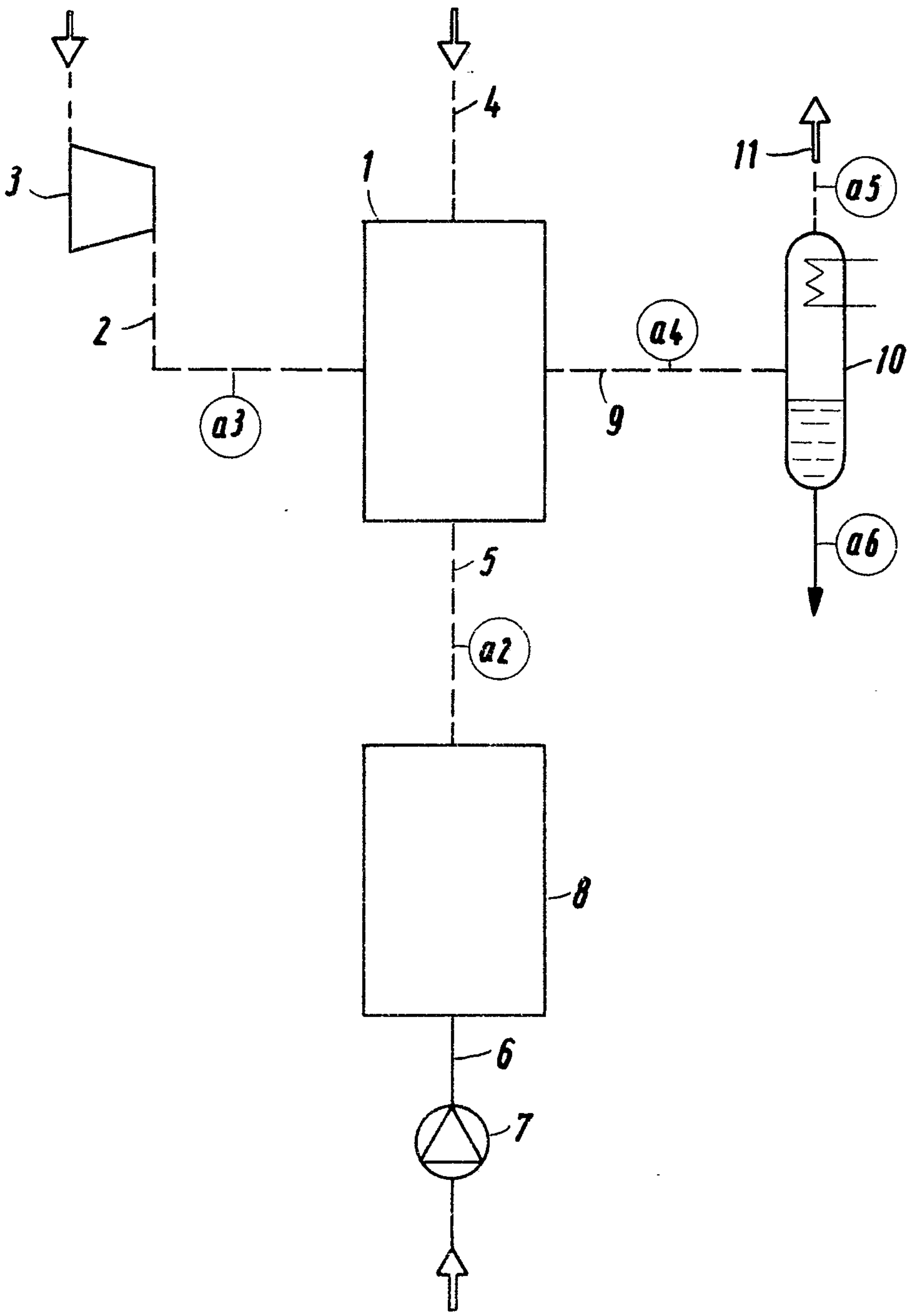

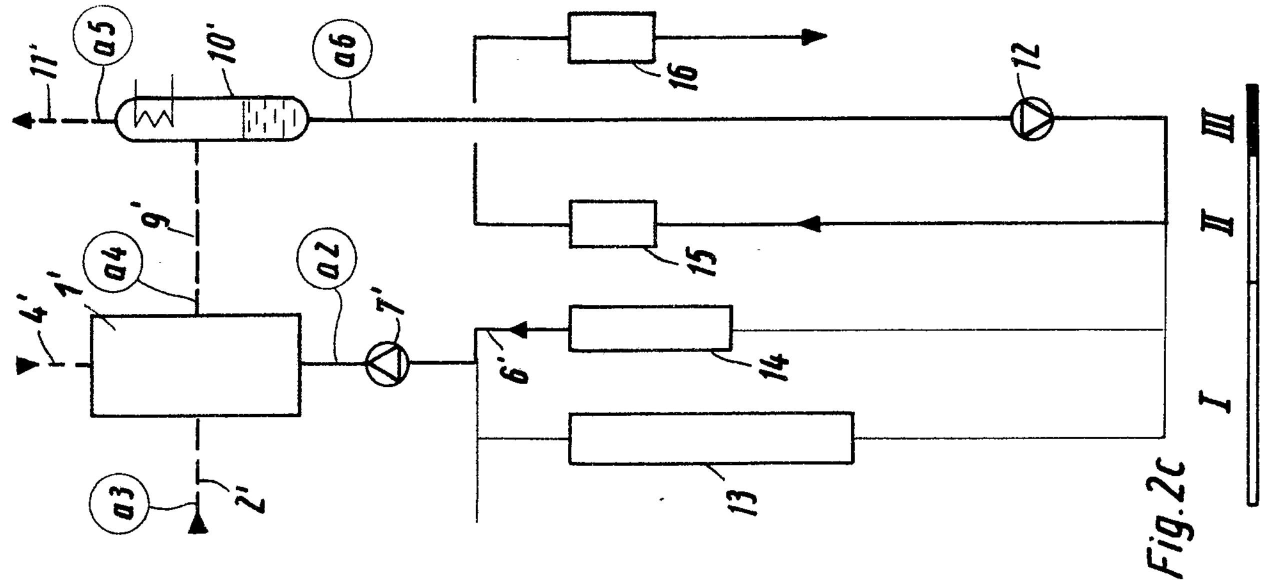


Fig.2c

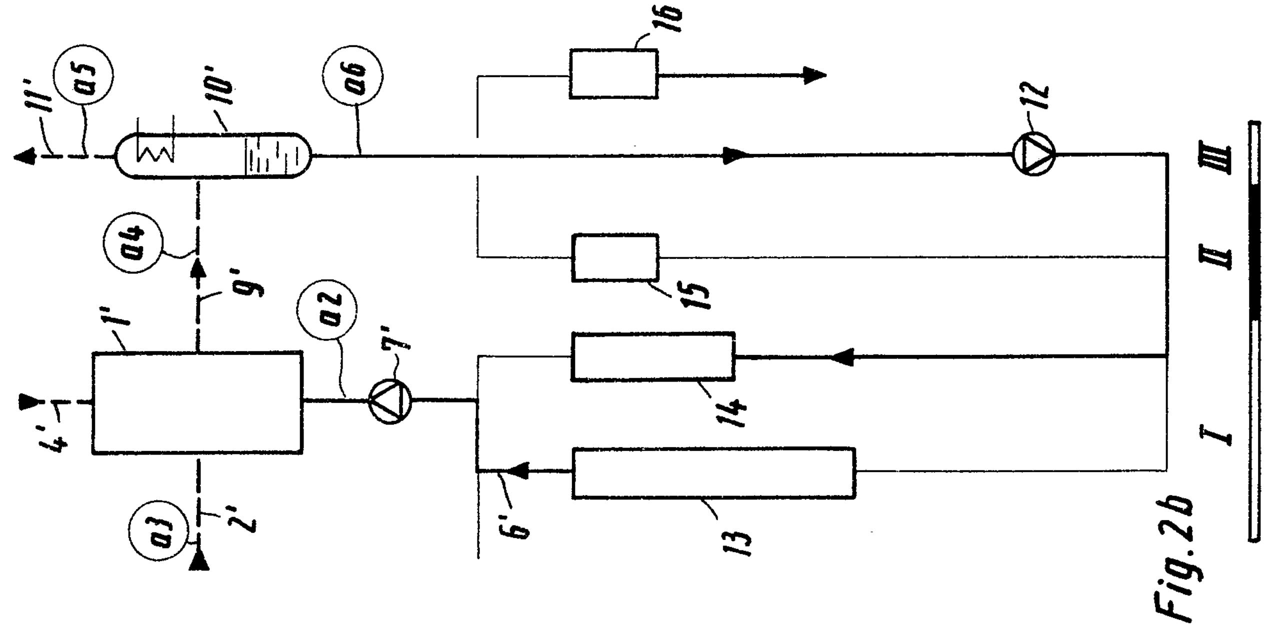


Fig.2b

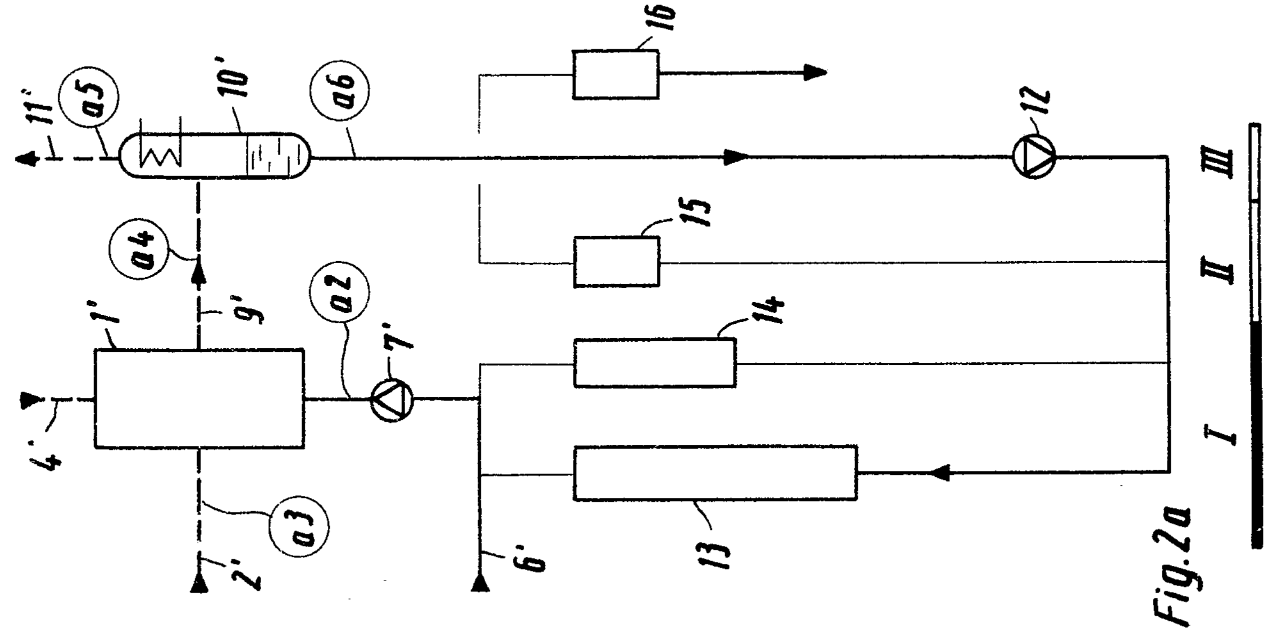


Fig.2a

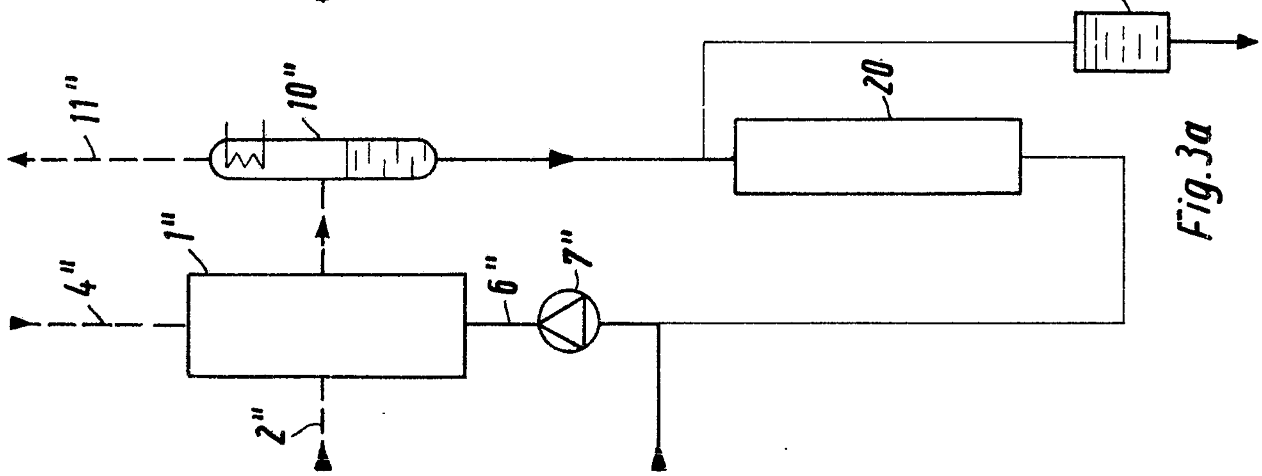

Fig.3a

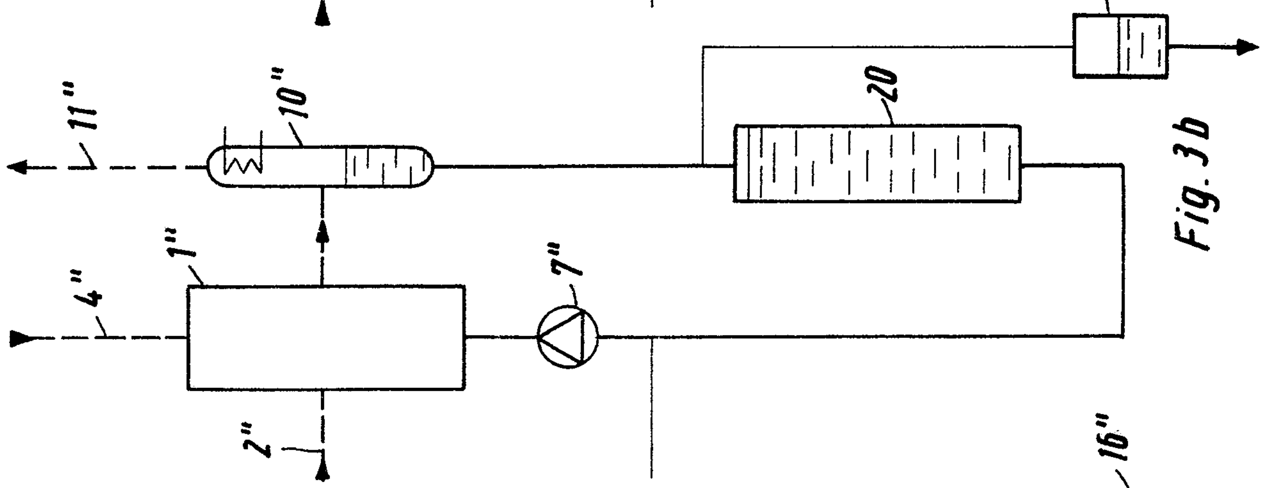

Fig. 3b

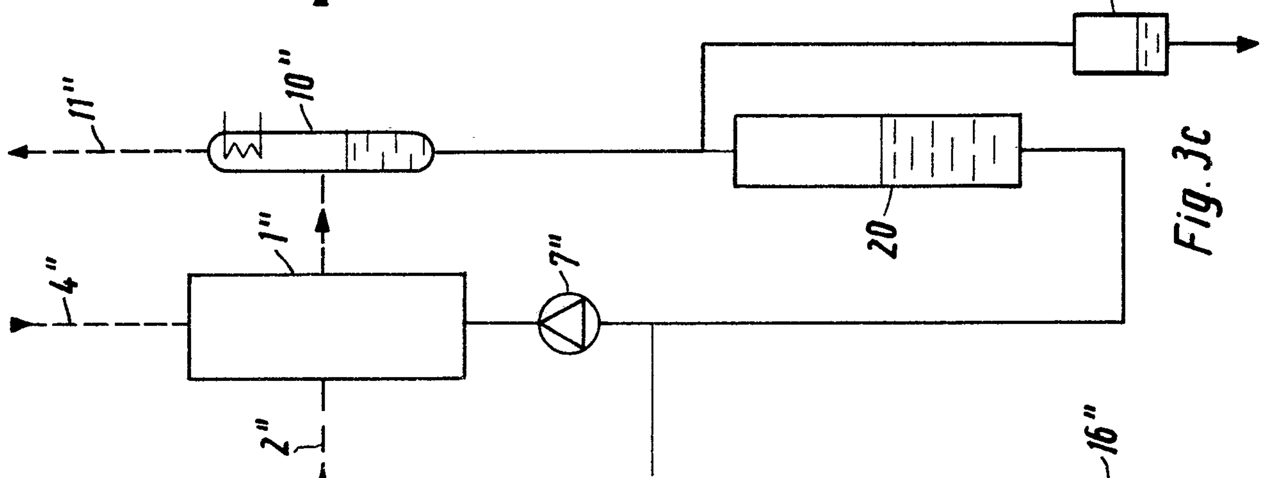

Fig. 3c

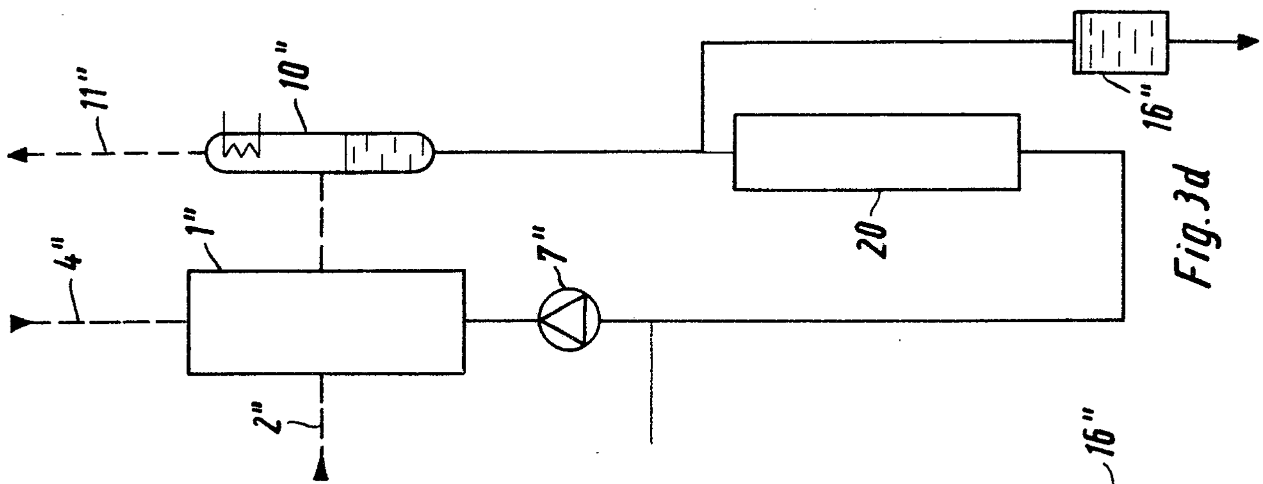

Fig.3d

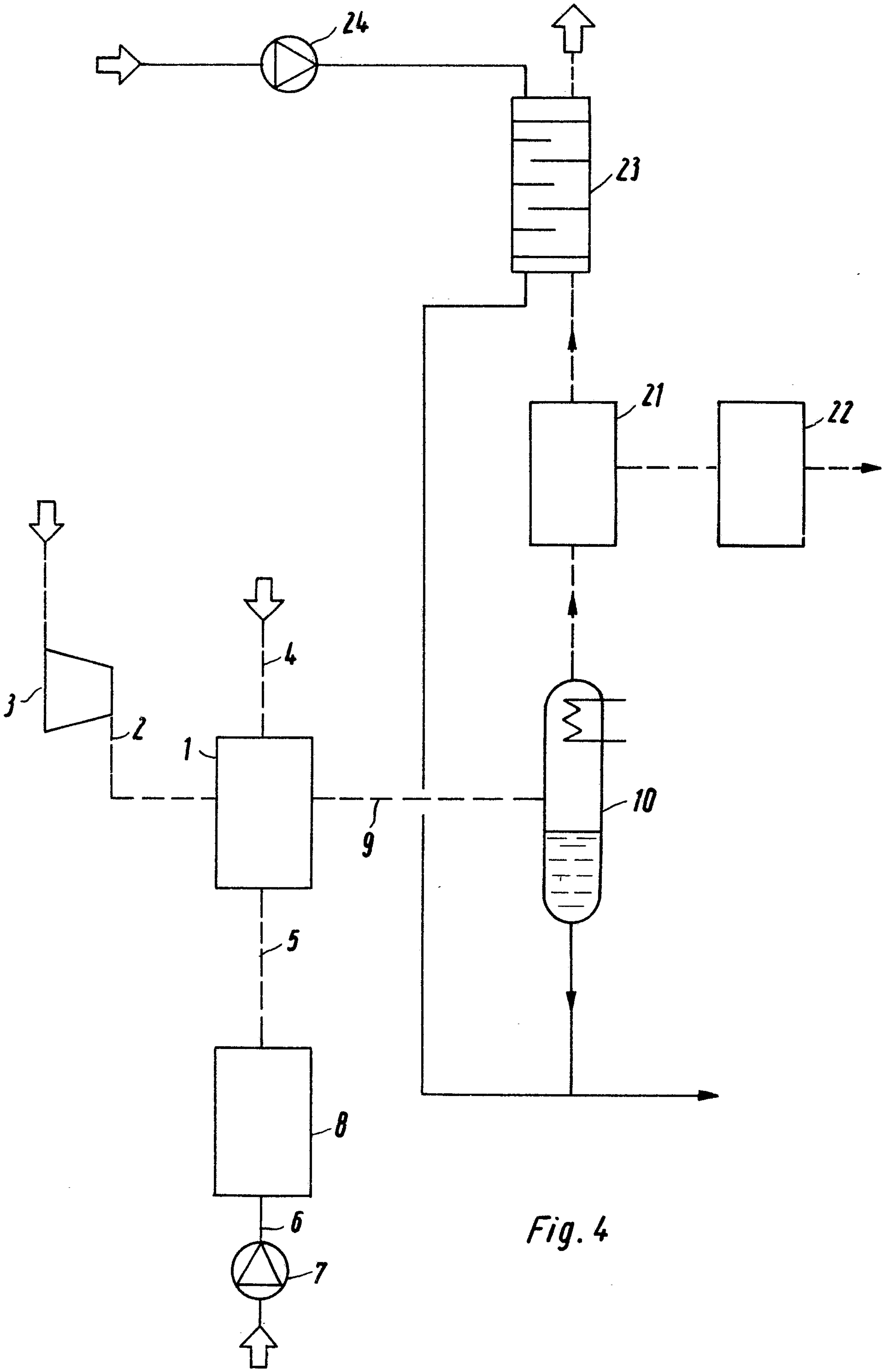


Fig. 4

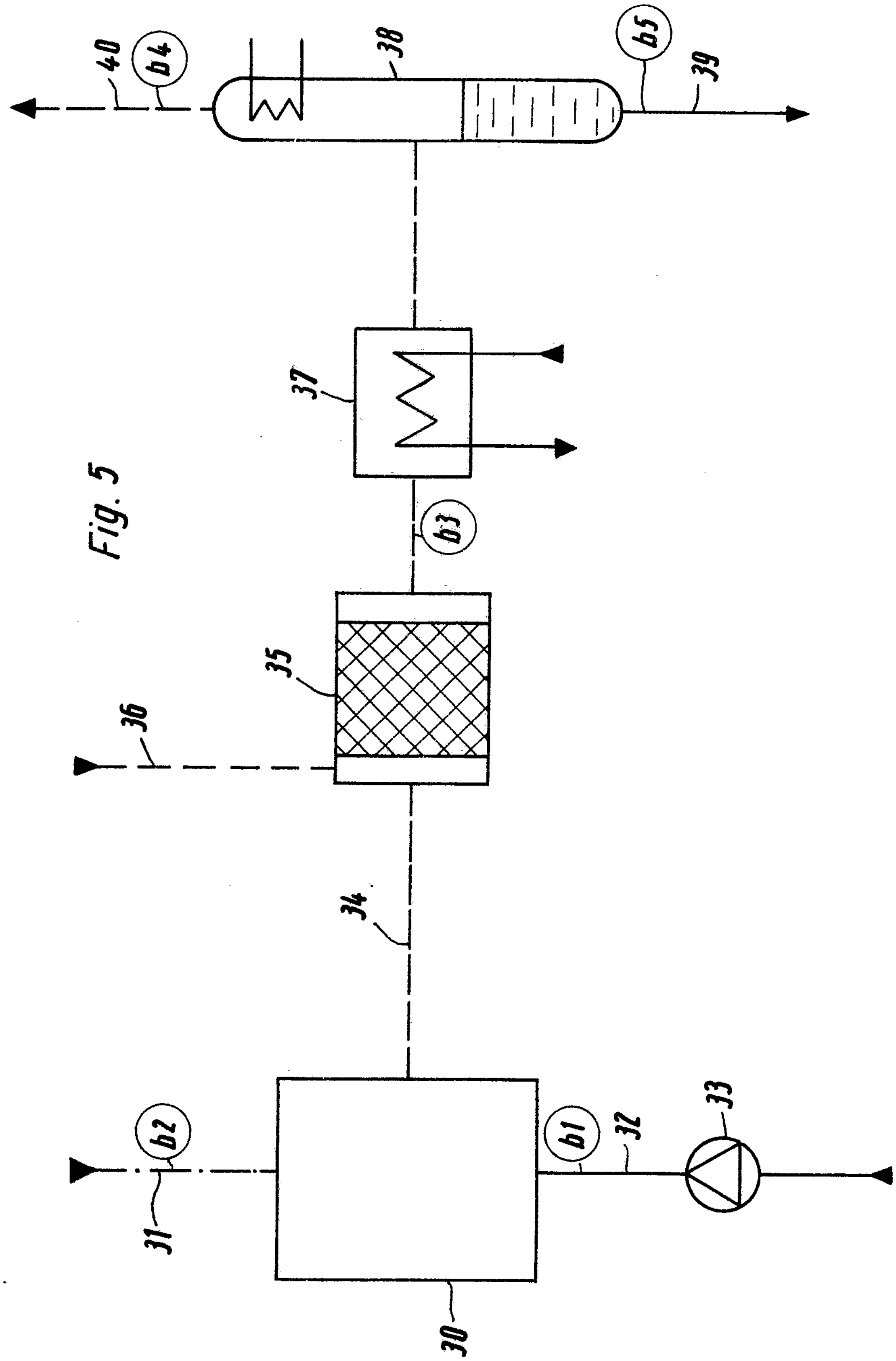


Fig. 5